# EUROPEAN PATENT APPLICATION

(11) **EP 2 843 956 A1**
(43) Date of publication of application: **04.03.2015**
(21) Application number: 13306173.9
(22) Date of filing: 27.08.2013
(51) Int. Cl.: H04N 21/2343, H04N 21/258, H04N 21/414, H04N 21/647, H04N 19/164

(54) **Method and device for encoding a video**

(71) Applicant: ALCATEL LUCENT, 92100 Boulogne-Billancourt (FR)
(72) Inventor: Vermoesen, Luc, 2018 Antwerpen (BE); Liekens, Werner, 2018 Antwerpen (BE)
(74) Representative: ALU Antw Patent Attorneys

(57) **Abstract**

Embodiments relates to a method for encoding a video (V_{S}) to be transmitted to a destination device (5), executed by a video encoding device (2), comprising:
- obtaining a current value of at least one transmission parameter (Pₜᵣₐₙₛ) representative of characteristics of a transmission channel (4) to the destination device (5),
- determining at least one encoding parameter in function of said current value, and
- encoding said video according to said at least one encoding parameter (P_{Enc}), wherein said method comprises determining a predicted value of at least one transmission parameter (Pₜᵣₐₙₛ), said at least one encoding parameter being determined in function of said current value and said predicted value.

## Description

### FIELD OF THE INVENTION

The present invention relates to the field of video transmission. In particular, the present invention relates to a method and a device for encoding a video to be transmitted.

### BACKGROUND

A transmission channel may have a variable signal quality or bandwidth. For example, the bandwidth of a wireless link between a fixed antenna and a mobile device depends on the distance between the antenna and the mobile device and changes when the mobile device moves. Also, the bandwidth of a wire line may vary. For example, when a VDSL DSLAM does retraining of the link in order to change the bit mapping constellation, the link bandwidth will change as well.

Video transmission through such a channel of variable signal quality and/or bandwidth may be handled in various manners: Error recovery, retransmission, video buffering, adaptive streaming... Error recovery and retransmission are techniques whereby the error already occurred and corrective measures need to be taken afterwards. These schemes require some kind of data buffering. Video buffering is a pro-active technique whereby fluctuations in bandwidth or link-quality are normalized over time by temporally storing video data before play out occurs. Buffering however introduces delay and latency which is not always desirable, in particular case of live video feeds.

It has been proposed, in techniques called cross-layer design, to adapt the video encoding in function of characteristics of the physical channel. For example, the bit rate of the video coder may be determined in function of a given physical bandwidth constraint. However, if the characteristics of the physical channel vary between encoding and transmission, the encoding may not be appropriate..

### SUMMARY

It is thus an object of embodiments of the present invention to propose a method and a device for encoding a video, which do not show the inherent shortcomings of the prior art.

Accordingly, embodiments relate to a method for encoding a video to be transmitted to a destination device, executed by a video encoding device, comprising:
- obtaining a current value of at least one transmission parameter representative of characteristics of a transmission channel to the destination device,
- determining at least one encoding parameter in function of said current value, and
- encoding said video according to said at least one encoding parameter,
wherein said method comprises determining a predicted value of at least one transmission parameter, said at least one encoding parameter being determined in function of said current value and said predicted value.

Correlatively, embodiments relate to a video encoding device for encoding a video to be transmitted to a destination device, comprising:
- means for obtaining a current value of at least one transmission parameter representative of characteristics of a transmission channel to the destination device,
- means for determining at least one encoding parameter in function of said current value, and
- means for encoding said video according to said at least one encoding parameter,
wherein the video encoding device further comprises means for determining a predicted value of at least one transmission parameter, said at least one encoding parameter being determined in function of said current value and said predicted value.

In one embodiment, the destination device is a mobile device and determining said predicted value comprises:
- determining a current position of the destination device,
- determining a future position of the destination device in function of said current position and of historic data representative of successive positions of mobile devices, and
- determining said predicted value in function of said future position.

In one embodiment, the destination device is a mobile device connected to a cell of a cellular network, and determining said predicted value comprises:
- determining a predicted number of mobile clients connected to the cell,
- determining a future resources allocation for the cell in function of the predicted number of mobile clients, and
- determining said predicted value in function said future resources allocation.

The transmission channel may include at least one wireless link, the at least one transmission parameter including the Timing Advance parameter as defined by a 3GPP standard.

The transmission channel may include a plurality of wireless links, said current position being determined in function of the Timing Advance parameters of the respective wireless links.

The transmission channel may include a DSL wire line.

The encoding parameters may include at least one of a frame rate, a bit rate, a resolution and a quantization parameter.

The transmission parameter may include at least one of an available bandwidth and a signal to noise ratio.

The method may comprise streaming the encoded video to the destination device through a network.

Embodiments also relate to a computer program including instructions adapted to perform said method for encoding a video when said program is executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 shows a system for encoding and transmitting a video,
Figure 2 is a functional view of the video encoding device of the system of figure 1,
Figure 3 is a flowchart of a method for encoding a video, executed by the video encoding device of figure 2,
Figure 4 is a functional view of the predictor module of the video encoding device of figure 2,
Figure 5, which comprises Fig. 5A, Fig. 5B and Fig. 5C, shows paths of a mobile destination device and corresponding graphs of the past, current and predicted values of a transmission parameter, and
Figure 6 is a structural view of the video encoding device of figure 2.

### DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

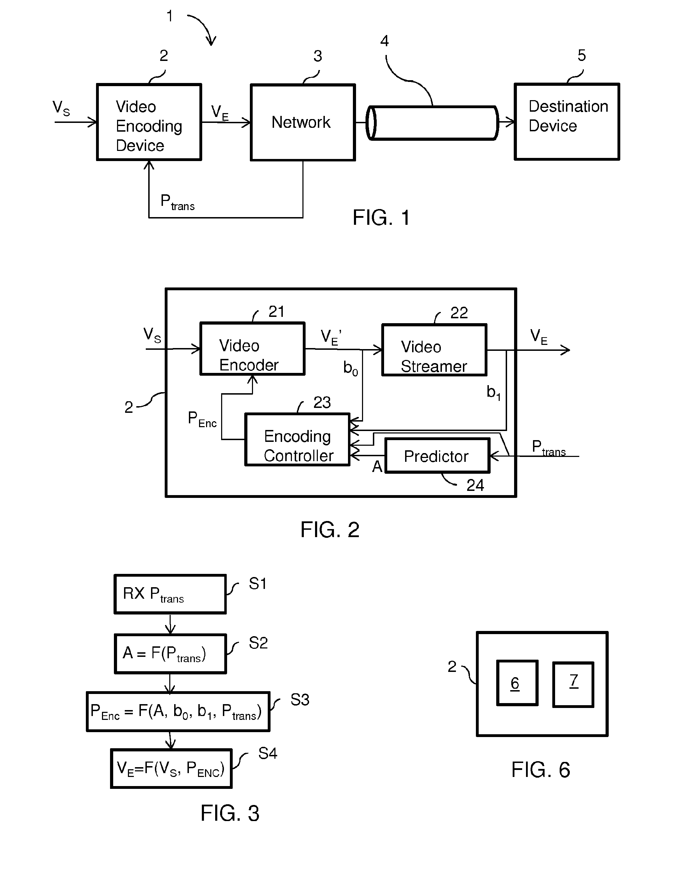

**Figure 1** shows a system 1 for encoding and transmitting a video. The system 1 comprises a video encoding device 2, a network 3, a transmission channel 4 and a destination device 5.

The video encoding device 2 encodes a source video V_{S} into an encoded video V_{E}, and provides the encoded video V_{E} to the network 3 for transmission, for example by using a video streaming device. The functioning of the video encoding device 2 will be described in more details with reference to figures 2 to 5.

The network 3 transmits the encoded video V_{E} received from the video encoding device 2 to the destination device 5, using the transmission channel 4. Moreover, the network 3 provides transmission parameters Pₜᵣₐₙₛ representative of characteristics of the transmission channel 4 to the video encoding device 2.

In one embodiment, the network 3 comprises a cellular mobile access network, for example of one of the types defined by the 3GPP standards such as 3G or LTE. In that case, the network 3 comprises for example a mobile switching center (MSC), at least one base station controller (BSC) and a plurality of base transceiver stations (BTS). Note that different terminology may be used to designate those apparatuses, such as NodeB or eNodeB. In this embodiment, the transmission channel 4 includes an active wireless link from one base transceiver station to the destination device 5, and may also include inactive wireless links such as between a neighboring base transceiver station and the destination device 5. Finally, the destination device 5 is a mobile device capable of receiving the encoded video V_{E} for example for display, storage, forwarding... For example, the destination device 5 is a smart phone, a tablet computer, a laptop computer... Note that the characteristics of the transmission channel 4 vary when the destination device 5 moves. In particular, the bandwidth of the transmission channel 4 increase the closer the destination device 5 gets to a base transceiver station.

In another embodiment, the network 3 comprises a wire access network, for example using a DSL technology such as the VDSL or VDSL2 standard. In that case, the network 3 comprises for example a DSLAM and the transmission channel 4 includes a wire line from the DSLAM to the destination device 5. Finally, the destination device 5 is for example a modem connected to a user device capable of receiving the encoded video V_{E} for example for display, storage, forwarding... For example, the user device is a smart phone, a tablet computer, a laptop computer, a desktop computer... Note that the characteristics of the transmission channel 4 vary over time. In particular, when the VDSL DSLAM does retraining of the link in order to change the bit mapping constellation, the bandwidth of the transmission channel 4 will change as well.

As explained before, in the system of figure 1, the network 3 monitors the transmission channel 4 and provides transmission parameters Pₜᵣₐₙₛ representative of characteristics of the transmission channel 4 to the video encoding device 2. Accordingly, the video encoding device 2 may adapt the encoding of the source video V_{S} into the encoded video V_{E} to suits the characteristics of the transmission channel 4. This will now be described in more details with references to figures 2 to 5.

In the case of a cellular mobile access network, the transmission parameters Pₜᵣₐₙₛ may include for example a signal to noise ratio, an available bandwidth, and the Timing Advance parameters for the active wireless link and the inactive wireless links between the destination device 5 and BTS. The Timing Advance parameter is defined by the 3GPP standards, and is an indication of the distance between the mobile device and the BTS.

In the case of a wire access network, the transmission parameters Pₜᵣₐₙₛ may include for example a signal to noise ratio, an available bandwidth, QAM constellation configuration, FEC settings, etc.

**Figure 2** is a functional view of the video encoding device 2. The video encoding device 2 comprises a video encoder 21, a video streamer 22, an encoding controller 23 and a predictor 24.

The video encoder 2 encodes the source video V_{S} into an intermediate encoded video V_{E}'. The encoding performed by the video encoder 2 depends on a set of encoding parameters P_{Enc}, which include for example a quantization parameter (QP), a desired output bit rate, resolution, frame rate, etc. Given a subset of encoding parameters P_{Enc}, the video encoder 21 adapts the encoding so as to obtain the desired values. For example, given a desired output bit rate, the video encoder 2 adapts the quantization, the resolution and/or the frame rate so as to output an intermediate encoded video V_{E}' having the desired output bit rate (within a margin). The skilled person is aware of different encoding technique for encoding a video according to such encoding parameters, and this will not be described in detail.

The video streamer 22 processes the intermediate encoded video V_{E}' and outputs the encoded video V_{E} to the network 3. The process performed by the video streamer 22 may include adding error correction codes, encapsulation, streaming... Consequently, the bit rate b₁ of the encoded video V_{E} may be greater than the bit rate b₀ of the intermediate encoded video V_{E}'.

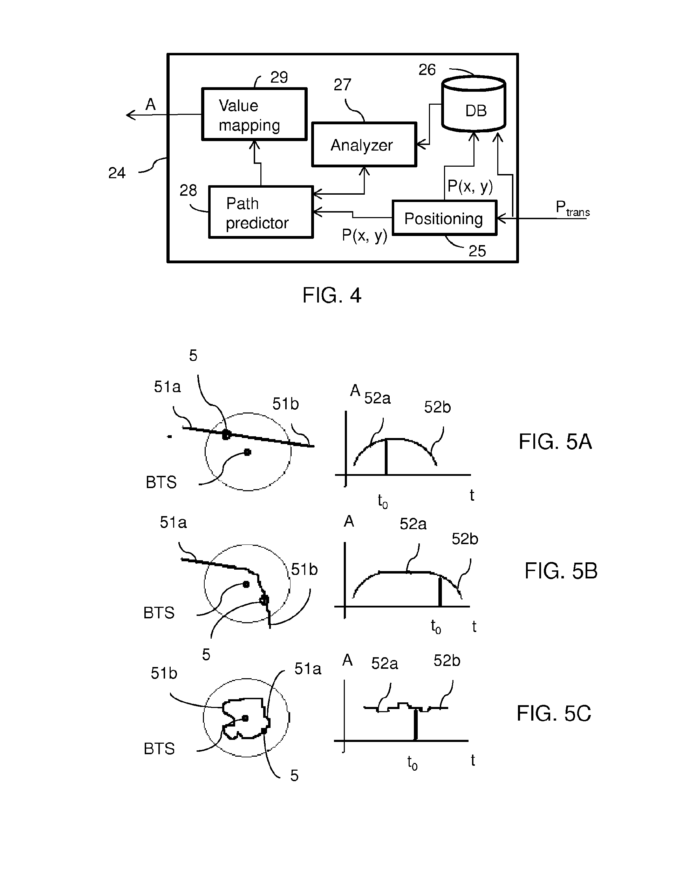

The predictor 24 obtains the current values of the transmission parameters Pₜᵣₐₙₛ from the network 3, and determines a sequence of predicted values A of at least one of the transmission parameters Pₜᵣₐₙₛ. For example, the predictor 24 determines a predicted value of the bandwidth BW(t) of the transmission channel 4 for t = 1, 2, 3, 4 and 5 seconds in the future. The prediction may be based for example on a theoretical model which links the current and recent values of the transmission parameters Pₜᵣₐₙₛ to predicted values. In another embodiment, the prediction may be based on a correlation analysis between historical values of the transmission parameters Pₜᵣₐₙₛ and the current and recent values of the transmission parameters Pₜᵣₐₙₛ. A detailed example of the functioning of the predictor 24 is described hereafter with references to figures 4 and 5.

The encoding controller 23 determines the encoding parameters P_{Enc} in function of characteristics of the intermediate encoded video V_{E}' (for example the bit rate b₀ and the frame rate FPS₀), of characteristics of the encoded video V_{E} (for example the bit rate b₁), of the current value of the transmission parameters Pₜᵣₐₙₛ, and of the predicted values A of the transmission parameters Pₜᵣₐₙₛ. For example, if the predicted values A shows that the bandwidth BW will progressively increase from a low value to a higher value, the encoding controller 23 may decide to use first a low frame rate as well as QP parameter so as to obtain a low bit rate which may be transmitted in the low bandwidth, then to progressively increase the frame rate for coarse grained correction and use QP modification for more fine grained corrections.

The use of the predicted values A determined by the predictor 24 allows the encoding controller 23 to encode the video in a proactive manner, for example by anticipating changes of characteristics of the transmission channel 4.

**Figure 3** is a flowchart of a method for encoding a video, executed by the video encoding device 2.

Initially, the video encoding device 2 obtains the current values of the transmission parameters Pₜᵣₐₙₛ from the network 3 (step S1).

Then, the predictor 24 determines predicted values A of at least one transmission parameters Pₜᵣₐₙₛ (step S2).

Then, the encoding controller 23 determines the encoding parameters P_{Enc}, in function of the current and predicted values A of the transmission parameters Pₜᵣₐₙₛ (step S3). As explained before, characteristics of the intermediate encoded video V_{E}' and/or of the encoded video V_{E} may also be taken into account.

Finally, the video encoder 21 encodes the source video V_{S} into the intermediate encoded video V_{E}' according to the specified encoding parameters P_{Enc} (step S4).

Note that although figure 3 shows steps S1 to S4 as successive steps, these steps may be performed in parallel in a continuous manner as is more apparent from figure 2.

In an embodiment wherein the transmission channel 4 includes an active wireless link from one base transceiver station to the destination device 5, and at least one inactive wireless link between a neighboring base transceiver station to the destination device 5, the transmission parameters Pₜᵣₐₙₛ reflect the characteristics of each wireless link and the video encoding device 2 may perform different encoding for each wireless link. The encoded video V_{E} corresponding to the active wireless link is transmitted to the destination device 5. In case of switch to another cell, the encoded video V_{E} corresponding to the new active wireless link is already ready to be transmitted to the destination device 5. To ensure seamless video playout, Video Transfer Units containing sequence number on encoded video data NAL units may be used as a vehicle for video transport, whereby a video player of the destination device 5 may account for the correct sequence of Video Transfer Units playout.

Although figure 1 shows only one destination device 5, similar processing may be applied to a plurality of destination devices 5, for example to each mobile client connected to a cell.

**Figure 4** is a functional view of the predictor 24 according to one embodiment. In particular, the predictor 24 of figure 4 is suited for a network 3 of the mobile access network type and a mobile destination device 5.

In this embodiment, the predictor 24 comprises a positioning module 25, a database 26, an analysis module 27, a path predictor 28 and a value mapping module 29.

The positioning module 25 determines the position P(x, y) of the mobile devices connected to the network 3, in function of the transmission parameters Pₜᵣₐₙₛ. For example, based on Timing Advance parameters which represent the distances between the BTS of the network 3 and a mobile device, the positioning module 25 may apply a triangulation technique and determines the position P(x, y) of a mobile device. Note that this position is in the radio-domain and needs not be translated into a geographical space position.

The positions of the mobile devices are determined for each time slice T, for example with T=1 second. Successive positions of a mobile device form a trajectory Traject in domain [Trj], for example with Trj=2 hours. Positions and trajectories are stored in the database 26 for a period of time [P], whereby [P] is a sliding window in time, for example P=2 months. Also, basic metrics derived from the positions are stored with Traject: velocity v, velocity variation, trajectory time Ttrj.

The analysis module 27 analyses the data stored in the database 26, with a goal to do path pattern detection. The measurements may be normalized by removing the time span component (pedestrian walking along a path and a car driving along the same path is merely a difference in time span). For example, for each T in Ttrj, the analysis module 27 determines groups/clustering (G) with discrete values for P(x, y) for normalized T, e.g. GT1Pa. Denote all clusters as GTnPm. For each GTxPy in GTnPm, the analysis module 27 determines the probability for transitioning from GT1P1 to GT2Pm, each described as NextPath probability (NPP chart), PGTnPm2GTn+1Pm+r. At this moment the probability of moving from one position to another is charted and known.

Instead of applying the above onto the entire database 26, the analysis module 27 may group mobile devices based on velocity (thus slow and fast moving device), and/or group on day of week, weekly and monthly basis.

The path predictor 28 determines predicted future positions of the destination device 5, in function of the recent and current positions determined by the positioning module 25 and of possible path patterns corresponding to historic position data of mobile devices from the database 26/analysis module 27. For example, when the destination device 5 enters a base station, its radio data is being measured. The first measurement is being used to determine the corresponding GT1Px. From the subset of NextPath probabilities PGTIPx2G2Pm that have the same source GT1Px, the group PGT1Px2G2Py with highest probability is selected. This provides for a first estimate of likely future position of the destination device 5. The PGT1Px2G2Py corresponds to a certain destination position. Then, as the destination device 5 remains associated with the base station and more and more measured data becomes available, these measurements can be matched against the historic measurements of the database 26 whereby a weighing factor is used to account for timing history. (Older measurements have less weight than more recent measurements. Movement modeling). As such, the prediction process can take into account a few previous measurements and make a more precise estimation for T n+1 e.g. by using an additive markov chain of order n to do the prediction.

Finally, the value mapping module 29 determines the predicted values A of transmission parameters Pₜᵣₐₙₛ associated with the predicted positions determined by the path predictor 28. For example, the parameter mapping module 29 maps each predicted position to corresponding values of radio parameters RP_GT1Px2G2Py, based on historic measurement of positions and radio parameters. These Radio Parameters on their turn are an indication of the likely bandwidths the destination device 5 will have at the predicted positions. The predicted values A of the bandwidth are provided to the encoding controller 23 and used to recalculate the video encoding parameters P_{Enc}.

**Figure 5**, which is composed of Fig. 5A, Fig. 5B and Fig. 5C, shows paths of a mobile destination device 5 passing by a base transceiver station BTS (lefthand part, physical domain), and corresponding graphs showing the variation over time of the value of a transmission parameter (right-hand part, signal domain). In each case, the path is composed of past positions 51a, a current position at time to, and predicted positions 51b. Correspondingly, the graphs show past values 52a and predicted values 52b of the transmission parameter. The predicted positions 51b and the corresponding predicted values 52b are determined by the predictor 24, as explained with reference to figure 4.

In Fig. 5A, the destination device 5 follows a straight line. The bandwidth increases as it gets nearer the BTS, then decreases as the distance between the destination device 5 and the BTS increases. The predicted decrease may be used by the encoding controller 2 to lower the bit rate of the encoded video V_{E}.

In Fig. 5B, the destination device 5 follows a path composed broadly of a first line segment, a curve around the BTS, and a second line segment. Accordingly, the bandwidth increases as the destination device 5 gets nearer the BTS (first line segment), stays more or less constant during the curve, then decreases as the distance between the destination device 5 and the BTS increases (second line segment). Again, the predicted decrease may be used by the encoding controller 2 to lower the bit rate of the encoded video V_{E}.

In Figure 5C, the destination device 5 follows a curved path around the BTS. The small variations in the distance between the destination device 5 and the BTS correspond to small variations in the bandwidth. The predicted bandwidth variations may be used by the encoding controller 2 to adapt the encoding process.

**Figure 6** is a structural view of the video encoding device 2. The video encoding device 2 has the material architecture of a computer and comprises a processor 6 and a memory 7. The processor 6 is capable of executing computer programs stored in the memory 7. In one embodiment, the functional modules of figures 2 and 4 and the steps of figure 3 correspond to the execution of such a computer program.

In the above-described embodiment wherein the network 3 comprises a cellular mobile access network, the predicted value A is determined in function of the transmission parameters Pₜᵣₐₙₛ associated with the destination device 5. When the destination device 5 enters a cell, it will be allocated capacity. In case abundant resources are available at the cell, there is no impact from other mobile clients.

However, in case all resources from a cell are already allocated, allocating resources for the new client will impact the existing mobile clients, including the destination device 5. Since resources for existing clients will be reduced at entrance of the new client(s), communication path characteristics of existing clients change with immediate impact.

Accordingly, in one embodiment, the predictor 24 determines a predicted number of mobile clients connected to the cell of the destination device 5, for example for a few seconds (e.g. 5 seconds) in the future. Then, the predictor 24 determines a future resources allocation in function of the predicted number of mobile clients, and determines said predicted value A (for example the future bandwidth allocated to the destination device 5) in function said future resources allocation.

The future number of mobile clients connected to the cell may be predicted in various manners. For example, the path of mobile clients connected to neighboring cells may be predicted in a similar manner as the path prediction for the destination device 5 as described above. In another example, a database stores historic data regarding the number of mobile clients connected to the cell, for example with a time scale of one second for a period of one month or more. In that case, the future number of mobile clients may be determined for example based on a correlation between the current and recent number of mobile clients (for example for the last few seconds) and patterns identified in the historic data.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for encoding a video (V_{S}) to be transmitted to a destination device (5), executed by a video encoding device (2), comprising:
- obtaining (S1) a current value of at least one transmission parameter (Pₜᵣₐₙₛ) representative of characteristics of a transmission channel (4) to the destination device (5),
- determining (S3) at least one encoding parameter (P_{Enc}) in function of said current value, and
- encoding (S4) said video according to said at least one encoding parameter (P_{Enc}), wherein said method comprises determining (S2) a predicted value (A) of at least one transmission parameter (Pₜᵣₐₙₛ), said at least one encoding parameter (P_{Enc}) being determined in function of said current value and said predicted value (A).

2. Method according to claim 1, wherein said destination device (5) is a mobile device and determining said predicted value (A) comprises:
- determining a current position of the destination device (5),
- determining a future position of the destination device (5) in function of said current position and of historic data (26) representative of successive positions of mobile devices, and
- determining said predicted value (A) in function of said future position.

3. Method according to claim 1 or 2, wherein said destination device (5) is a mobile device connected to a cell of a cellular network, and determining said predicted value (A) comprises:
- determining a predicted number of mobile clients connected to the cell,
- determining a future resources allocation for the cell in function of the predicted number of mobile clients, and
- determining said predicted value (A) in function said future resources allocation.

4. Method according to one of claims 1 to 3, wherein said transmission channel (4) includes at least one wireless link, the at least one transmission parameter (Pₜᵣₐₙₛ) including the Timing Advance parameter as defined by a 3GPP standard.

5. Method according to claims 2 and 4, wherein said transmission channel (4) includes a plurality of wireless links, said current position being determined in function of the Timing Advance parameters of the respective wireless links.

6. Method according to claim 1, wherein said transmission channel (4) includes a DSL wire line.

7. Method according to one of claims 1 to 6, wherein the encoding parameters (P_{Enc}) includes at least one of a frame rate, a bit rate, a resolution and a quantization parameter.

8. Method according to one of claims 1 to 7, wherein the transmission parameter (Pₜᵣₐₙₛ) includes at least one of an available bandwidth and a signal to noise ratio.

9. Method according to one of claims 1 to 8, comprising streaming the encoded video (V_{E}) to the destination device (5) through a network (3).

10. Computer program (P) including instructions adapted to perform the method according to one of claims 1 to 9 when said program is executed by a computer.

11. Video encoding device (2) for encoding a video (V_{S}) to be transmitted to a destination device (5), comprising:
- means (6, 7) for obtaining a current value of at least one transmission parameter (Pₜᵣₐₙₛ) representative of characteristics of a transmission channel (4) to the destination device (5),
- means (6, 7; 23) for determining at least one encoding parameter (P_{Enc}) in function of said current value, and
- means (6, 7; 21) for encoding said video according to said at least one encoding parameter (P_{Enc}),
wherein the video encoding device (2) further comprises means (6, 7; 24) for determining a predicted value (A) of at least one transmission parameter (Pₜᵣₐₙₛ), said at least one encoding parameter (P_{Enc}) being determined in function of said current value and said predicted value (A).
